# FASCICULE DE BREVET EUROPEEN

(11) **EP 3 602 253 B1**
(45) Date de publication et mention de la délivrance du brevet: **26.07.2023**
(21) Numéro de dépôt: 18722648.5
(22) Date de dépôt: 27.03.2018
(51) Int. Cl.: G06F 3/03, H04N 7/15, H04N 7/14, H04N 5/222, H04N 23/50

(54) **SYSTÈME DE TRANSPARENCE POUR CAMÉRA BANALISÉE**
TRANSPARENZSYSTEM FÜR EINE GÄNGIGE KAMERA
TRANSPARENCY SYSTEM FOR COMMONPLACE CAMERA

(30) Priorité: 30.03.2017 FR 1752712
(43) Date de publication de la demande: 05.02.2020
(73) Titulaire: Orange, 92130 Issy-les-Moulineaux (FR)
(72) Inventeur: SALOU, Catherine, 92326 Châtillon Cedex (FR); CHODOROWSKI, Jacques, 92326 Châtillon Cedex (FR)
(86) Numéro de dépôt international: PCT/FR2018/050745
(87) Numéro de publication internationale: WO 2018/178563

(56) Documents cités:
- JP-A- 2007 049 616
- US-A1- 2008 002 962
- US-A1- 2008 112 700
- US-A1- 2010 328 461

## Description

### DOMAINE DE L'INVENTION

Le domaine de l'invention est celui des dispositifs numériques connectés, en particulier celui des dispositifs de capture d'images ou de vidéos : webcam, caméra de surveillance, caméra panoramique, etc.

L'invention se rapporte à un dispositif numérique connecté, dit dispositif de signalisation dans la suite, apte à être utilisé en association avec un dispositif de capture. L'invention se rapporte également au procédé correspondant.

Le dispositif de signalisation et le dispositif de capture peuvent communiquer entre eux via une liaison de communication. Cette liaison est quelconque ; elle peut être filaire, par exemple une liaison Ethernet, USB, etc. Cette liaison peut aussi être sans fil ; un tel réseau sans fil est par exemple une connexion Bluetooth, un réseau Internet, une connexion wifi, etc.

La diffusion des images ou vidéos des dispositifs de capture permet la mise en oeuvre de services interactifs, par exemple des services de communication à distance, en temps réel, entre personnes.

L'invention trouve des applications dans le domaine de la vidéo-conférence, à travers des services d'assistance à la personne (par exemple via des robots domestiques), des services de formation à distance etc.

### ARRIÈRE-PLAN TECHNOLOGIQUE

Afin réduire les distances géographiques et maintenir un contact entre des personnes à travers une expérience plus « humaine » que le simple appel téléphonique, des caméras sont de plus en plus utilisées pour des communications telles que des appels « vidéo ». Dans le domaine de la domotique ou dans le monde professionnel, des interactions « riches » entre personnes peuvent ainsi s'effectuer à travers l'image et le son en temps réel.

Des caméras, comme des caméras embarquées dans des ordinateurs portables ou des webcams, sont des systèmes utilisés depuis plusieurs années pour passer des appels vidéo, en particulier depuis la généralisation des appels par voix IP.

Dans le domaine des services de surveillance ou d'assistance à distance, certaines de ces caméras possédant un objectif de capture unique, peuvent être pilotées à distance afin de couvrir un espace de surveillance plus large que le seul objectif de capture le permet. Parfois, des caméras, par exemple à l'aide de dispositifs annexes motorisés, réalisent des mouvements de rotation, de translation etc. afin d'élargir la couverture de surveillance, par exemple via le pilotage d'un ou plusieurs observateurs à distance. Ainsi, pour une personne située à proximité d'une caméra, ces mouvements peuvent être, dans ces cas-là, perceptibles. En conséquence, si cette personne s'interroge sur le fait d'être située ou non dans le champ d'observation d'une personne à distance, elle peut obtenir des réponses à partir de l'orientation de l'objectif de capture de la caméra.

Classiquement, dans nombre de services de vidéophonie, chacun des deux interlocuteurs communiquant lors d'un appel vidéo, visualise simultanément deux champs d'observation sur leur écran d'ordinateur : une première fenêtre d'observation comprenant l'autre interlocuteur (souvent en mode de visualisation principal), et une deuxième fenêtre d'observation comprenant lui-même (en mode de visualisation secondaire). Cette deuxième fenêtre permet ainsi à chaque interlocuteur de s'assurer de sa visibilité (ou non), de lui-même ou d'un élément de la scène dans laquelle il évolue, vis-à-vis de son interlocuteur.

De nouvelles innovations proposent aujourd'hui des dispositifs de capture « grand angle » et même « panoramiques », qui peuvent restituer un contenu audiovisuel d'une scène couvrant jusqu'à 360 degrés autour d'un point défini par la position de la caméra elle-même. Ces dispositifs possèdent la particularité d'être placés et déplacés (quand ils ne se déplacent pas eux-mêmes grâce à un support mobile) au sein d'un espace, comme dans un intérieur d'habitation. Pour certaines caméras ou dispositifs de capture, sans mouvements ou avec des mouvements pas ou peu perceptibles de leur objectif de capture ou de leurs objectifs de captures, si une personne, située dans une scène captée par un tel dispositif, s'interroge au cours d'une communication avec un interlocuteur à distance, sur le fait d'être située ou non dans le champ d'observation de cet interlocuteur, elle ne peut pas le savoir ; elle ne peut pas savoir où son interlocuteur dirige son regard, et donc en déduire où se porte l'attention de son interlocuteur ; ce qui peut ternir la qualité de ce moment d'échanges entre ces deux interlocuteurs. En effet, le mode vidéo panoramique offert par ces systèmes dits « panoramiques » ne permet plus de dissocier le contenu audiovisuel capturé, de la direction d'observation d'une personne à distance ; or, le champ d'observation, dans le cas d'un observateur humain ne peut pas être, physiologiquement, de 360 degrés.

Le document brevet US2008/002962A1 décrit un dispositif photographique capable d'afficher une image panoramique à 360 degrés à la fois et d'afficher également une plage prédéterminée dans l'image, simultanément comme si une caméra se déplaçait. En particulier, plusieurs unités d'affichage de direction de panoramique peuvent être disposées sur toute une périphérie externe de la caméra pour indiquer une direction d'affichage d'image de zoom. Les unités d'affichage de direction de panoramique peuvent être séquentiellement allumées ou clignotantes pour montrer la direction lorsque le mouvement panoramique est exécuté à gauche ou à droite.

Le document brevet US2010/328461A1 concerne un système et une méthode de surveillance vidéo sans fil avec verrouillage bidirectionnel des dispositifs de capture d'entrée. En particulier, ce document décrit des dispositifs de capture capables de détecter du mouvement, de capturer de la vidéo, de détecter et/ou de capturer de l'audio.

Le document brevet JP2007049616A concerne une caméra vidéo offrant des fonctionnalités spécifiques d'affichage lumineux des mouvements de la caméra suivants : déplacement horizontal de la caméra par une opération de mouvement panoramique, déplacement vertical de la caméra par une opération d'inclinaison. De plus, en cas d'opération de zoom ou de de-zoom, les fonctionnalités d'affichage associées aux opérations de déplacement vertical et horizontal sont combinées pour allumer plus ou moins largement une zone d'affichage de la caméra.

Le document brevet US2008/112700A1 décrit un dispositif d'imagerie comprenant une caméra apte à prendre des photographies ou à enregistrer une vidéo. Ce dispositif d'imagerie comporte en outre un ensemble de visée par projection qui projette un viseur pour indiquer visuellement un champ de vision de la caméra.

L'invention offre une solution ne présentant pas les inconvénients de l'état de la technique.

### L'INVENTION

A cet effet, selon un premier aspect matériel, il est proposé un dispositif de signalisation selon la revendication 1.

Le dispositif de signalisation ici décrit permet de signaliser un champ d'observation associé à une direction d'observation. Par une signalétique mise en oeuvre à travers un ou plusieurs indicateurs, le dispositif apporte à une ou des personnes présentes dans un espace observé, des informations utiles à l'amélioration de la qualité d'expérience des services de communication. Par « signalétique » est entendu un ensemble d'éléments mis en oeuvre à travers le dispositif de signalisation afin de permettre à une personne qui en prend connaissance d'en déduire une information attendue. Par « espace observé » ou « scène » est entendu l'environnement physique dans lequel se trouve un dispositif de capture. Une ou plusieurs personnes présentes dans un espace observé seront dans la suite du document appelées abusivement un ou des « observés » : en effet, ces observés sont potentiellement observés par un ou des tiers via une capture de la scène dans laquelle ils se trouvent. Par « champ d'observation » est entendu un sous-espace déterminé par le dispositif de signalisation à partir d'une direction d'observation dans un espace observé.

Une direction d'observation est plus généralement associée à une direction d'observation dirigée par une personne à distance, en fonction d'une action ou d'un comportement de cette personne, par exemple la direction du regard de cette personne. Bien qu'une signalisation d'un champ d'observation puisse se limiter à une signalisation d'une direction d'observation, une signalisation d'un champ d'observation peut signaliser, par exemple, une reconstitution d'un champ d'observation « réel » d'un observateur humain : par exemple, soit selon une signalisation du volume de ce champ caractérisé par un ensemble de sous-espaces à deux dimensions dans un espace à trois dimensions, soit selon une signalisation de la projection du volume de ce champ par rapport à un sous-espace à deux dimensions ; cette projection est alors caractérisée par deux directions et une mesure d'angle formée par ces deux directions, et est appelée secteur d'angle.

Parallèlement à un espace observé, un « espace d'observation » est défini comme un espace dans lequel s'effectue une « observation » d'un espace observé ; cette observation est effectuée soit par un « observateur » observant l'espace observé via un dispositif de visualisation, soit par un système informatique connecté de la même façon au dispositif de capture d'un espace observé ; lors d'une situation de communication, l'espace d'observation est généralement distinct de l'espace observé.

Dans un espace d'observation, au dispositif de visualisation des images/vidéos reçus du dispositif de capture, est généralement couplé un dispositif de pilotage d'une direction d'observation, par exemple celle d'un observateur.

Ainsi, le dispositif de signalisation ici décrit offre l'avantage de permettre à un observé de connaitre le champ d'observation d'un dispositif de pilotage à travers l'espace dans lequel il se trouve/déplace. Cette invention permet ainsi l'apport de la connaissance de cette information aux observés, et contribue à l'amélioration des modalités de communication des services à distance en caractérisant l'attention portée par un interlocuteur à distance, en particulier lors d'utilisation de dispositifs de capture définis comme « banalisés ». Le terme « banalisé » caractérise un dispositif de capture ou caméra impliquant, de par ses caractéristiques techniques et/ou physiques telles que la dissimulation sous une protection physique opaque de son objectif de capture ou la présence de plusieurs objectifs de capture, une direction d'observation difficile à interpréter par une personne se situant dans l'espace dans lequel se trouve le dispositif de capture. Par exemple, une caméra 360° est considérée comme « banalisée », en distinction à une caméra intégrée au-dessus de l'écran d'un ordinateur portable.

De nombreuses études, en particulier portant sur des services de vidéo-conférence, ont montré l'importance pour un interlocuteur de pouvoir valider l'attention portée par son interlocuteur afin de garantir un lien de communication optimal. L'enrichissement du mode de communication apporté par cette invention, en particulier en termes de ressenti utilisateur, est un avantage par rapport à l'art antérieur.

De même, cette invention contribue à une meilleure maitrise de la diffusion de l'image des observés dans le contexte d'utilisation de dispositifs banalisés, de surcroit avec un coût de mise en oeuvre faible.

Selon un mode de réalisation, le dispositif de signalisation est apte à signaliser le premier champ d'observation à partir d'une première signalétique basée sur au moins un indicateur visuel.

Avantageusement, ce mode de réalisation permet à un observé de valider, d'un seul coup d'oeil porté au dispositif de signalisation ici proposé, un champ d'observation associé à une direction d'observation dirigée depuis un espace d'observation. En particulier, un indicateur visuel peut être un composant lumineux de type LED.

Selon un autre mode de réalisation, qui pourra être mis en oeuvre alternativement ou cumulativement avec le précédent, le dispositif de signalisation est en outre apte à obtenir une première direction d'observation d'un dispositif dirigé par un observateur.

Avantageusement, ce mode de réalisation permet de signaliser une direction d'observation dirigée par un observateur afin de le restituer dans l'espace observé. Le dispositif de pilotage utilisé par l'observateur peut être quelconque : un dispositif embarqué dans un dispositif de type lunette ou casque de réalité virtuelle porté par cet observateur, ou bien un dispositif de pilotage de type télécommande, joystick, etc. En particulier, les données traitées par un dispositif tel qu'un casque de réalité virtuelle, sont issues de techniques ou d'une combinaison de techniques basées sur des dispositifs de type gyroscope, accéléromètre, etc., ou de détection de caractéristiques physiologiques d'un opérateur humain (mesures oculométriques, etc.),

Selon un autre mode de réalisation, qui pourra être mis en oeuvre alternativement ou cumulativement avec le précédent, le dispositif de signalisation est en outre apte à signaliser une entité en mouvement contenu dans le premier champ d'observation, à partir d'une deuxième signalétique basée sur au moins un indicateur sensoriel.

Avantageusement, ce mode de réalisation permet de signaliser à un observé son entrée ou sa sortie d'un champ d'observation déterminé par le dispositif de signalisation. Il est en particulier intéressant lorsque les observés souhaitent entrer, demeurer, ou à l'inverse quitter le champ d'observation d'un observateur à distance.

Selon un autre mode de réalisation, qui pourra être mis en oeuvre alternativement ou cumulativement avec les précédents, le dispositif de signalisation est en outre apte à signaliser un deuxième champ d'observation associé à une deuxième direction d'observation.

Avantageusement, ce mode de réalisation permet de signaliser simultanément, à travers un même dispositif de signalisation, deux champs d'observation relatifs à deux observations à distance distinctes. L'origine des observations est identifiable par des observés, par exemple grâce à des signalétiques différentes pour chaque champ d'observation. A noter que le terme « observateur » ne fait pas uniquement référence à un observateur humain, mais peut être attribué une machine ; d'où l'utilisation du terme « observation » pour faire référence à l'un ou l'autre des cas.

Bien que représenté sur le même dispositif de signalisation, le deuxième champ d'observation est déterminé et signalisé en fonction de la deuxième direction d'observation, indépendamment du premier champ d'observation.

Selon un autre mode de réalisation, qui pourra être mis en oeuvre alternativement ou cumulativement avec les précédents, le dispositif de signalisation est en outre apte à signaliser une activation d'une fonction de zoom/dézoom.

Avantageusement, ce mode de réalisation permet de signaliser une distance d'observation aux observés, selon une signalétique dédiée à la fonction zoom/dézoom. Par zoom ou dé-zoom est entendu deux techniques souvent intégrées sur les dispositifs de capture, connues de l'homme du métier, et permettant à l'utilisateur de ces dispositifs de modifier de manière continue l'angle de champ couvert par l'objectif du dispositif de capture. Une distance d'observation est associée à une direction d'observation. Une distance d'observation peut être représentée selon une précision plus ou moins grande via une signalétique : par exemple, une signalétique de type visuelle associée à une distance d'observation peut utiliser l'intensité lumineuse d'indicateurs visuels ou bien l'affichage d'une donnée indiquant cette distance d'observation.

La signalisation du champ d'observation est en particulier mise à jour lors de l'activation d'une fonction zoom/dézoom.

Selon un autre mode de réalisation, qui pourra être mis en oeuvre alternativement ou cumulativement avec les précédents, le dispositif de signalisation est en outre apte à signaliser le premier champ d'observation à partir d'une première signalétique basée sur deux indicateurs.

Avantageusement, ce mode de réalisation permet de délimiter un espace observé en deux espaces relatifs à deux secteurs disjoints de 180 degrés environ. Dans ce cas-là, le coût de mise en oeuvre est très limité compte tenu des moyens réduits nécessaires à cette signalétique. Cette signalétique est par exemple adaptée à des caméras panoramiques de type RICOH THETA (marque déposée).

Selon un autre mode de réalisation, qui pourra être mis en oeuvre alternativement ou cumulativement avec les précédents, le dispositif de signalisation est en outre apte à signaliser le premier champ d'observation à partir d'une première signalétique basée sur quatre indicateurs.

Avantageusement, ce mode de réalisation permet de délimiter un espace observé en quatre espaces relatifs à quatre secteurs disjoints de 90 degrés environ. Par rapport au mode de réalisation précédent, la quantité d'information apportée auprès des observés est donc supérieure, tout en maintenant un coût de mise en oeuvre faible.

Selon un autre mode de réalisation, qui pourra être mis en oeuvre alternativement ou cumulativement avec les précédents, la forme principale du dispositif est circulaire.

Avantageusement, ce mode de réalisation permet de constituer, au niveau cognitif, une signalétique efficace d'un champ d'observation à travers le dispositif ici décrit. Dans les figures décrites par la suite, ce mode de réalisation préféré présente les avantages de pouvoir placer un dispositif de signalisation de forme circulaire autour de la caméra à laquelle il est relié. Par exemple, un dispositif de visualisation type écran LCD, peut être considéré comme un indicateur se déplaçant sur un support en forme d'anneau (ou le support effectuant une rotation sur lui-même) ; la position de l'écran autour de la caméra panoramique indique ainsi la direction d'observation, et l'écran affiche le champ d'observation correspondant.

Selon un autre mode de réalisation, qui pourra être mis en oeuvre alternativement ou cumulativement avec les précédents, la forme principale du dispositif est sphérique.

Avantageusement, ce mode de réalisation permet de signaliser un angle solide relatif à un champ d'observation, en utilisant par exemple une sphère composée uniformément d'indicateurs lumineux de type LED sur sa surface. Cette signalétique présente également l'avantage de pouvoir placer le dispositif de signalisation autour de la caméra (ou bien les objectifs de la caméra placés sur la surface) et de signaliser aux observés la composante verticale de la direction d'observation.

Selon un autre mode de réalisation, qui pourra être mis en oeuvre alternativement ou cumulativement avec les précédents, le dispositif de signalisation est en outre apte à signaliser le premier champ d'observation à partir d'une première signalétique projetée.

Avantageusement, ce mode de réalisation permet à tout observé, par exemple effectuant des déplacements dans un espace observé, de maintenir un accès à l'information sur le champ d'observation signalisé par le dispositif de signalisation, par un autre moyen que celui de regarder le dispositif de signalisation directement, en particulier grâce à l'utilisation d'un faisceau lumineux ou d'une combinaison de faisceaux lumineux.

Selon un autre aspect, il est proposé un procédé de signalisation selon la revendication 11.

Ce procédé de signalisation permet d'effectuer les étapes nécessaires à la mise en oeuvre de la signalétique portée par le dispositif de signalisation.

L'invention comprend également un programme d'ordinateur apte à être mis en oeuvre sur un dispositif de signalisation comprenant des instructions de code qui, lorsqu'il est exécuté par un processeur, réalise le procédé de signalisation.

L'invention comprend également un support de données sur lequel a été mémorisée au moins une série d'instructions de code de programme pour l'exécution du procédé de signalisation.

L'invention sera mieux comprise à la lecture de la description qui suit, donnée à titre d'exemple et faite en référence aux dessins annexés sur lesquels :
La figure 1 illustre un équipement intégrant un dispositif de signalisation composé de quatre indicateurs lumineux.
La figure 2 illustre un équipement intégrant un dispositif de signalisation composé d'un écran de visualisation d'un champ d'observation.
La figure 3 illustre un équipement intégrant un dispositif de signalisation composé d'un support motorisé sur plusieurs degrés de liberté.
La figure 4 illustre un équipement intégrant un dispositif de signalisation signalisant au moins deux champs d'observation relatifs à deux observations distinctes.
La figure 5a illustre de façon schématique un environnement de mise en oeuvre de l'invention selon un mode particulier de réalisation de l'invention.
La figure 5b illustre des étapes du procédé de signalisation selon un mode particulier de réalisation du procédé de signalisation décrit en relation avec la figure 5a.
La figure 5c illustre un dispositif adapté pour la mise en oeuvre du procédé de signalisation d'un champ d'observation.
La figure 6 illustre un équipement intégrant un dispositif de signalisation composé par une sphère recouverte d'indicateurs lumineux de type LED.
La figure 7 illustre un équipement intégrant un dispositif de signalisation signalisant la détection d'un mouvement à travers un champ d'observation.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

Un dispositif de signalisation présenté dans la suite selon différents modes de réalisation est connecté via un réseau de communication à un dispositif de capture localisé dans un espace observé et/ou à un ou plusieurs dispositifs localisés dans un espace d'observation tels qu'un dispositif de visualisation, un dispositif de pilotage etc. ; le dispositif de capture étant lui-même connecté à un réseau de communication, identique ou différent du précédent, permettant en particulier d'envoyer le flux vidéo capté dans l'espace observé vers l'espace d'observation.

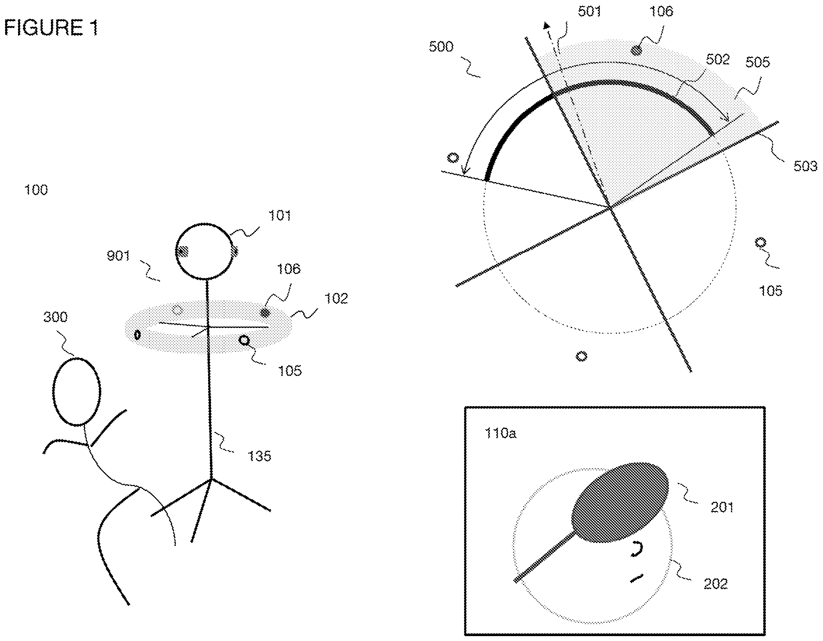

La figure 1 illustre un équipement 901 décrivant un mode de réalisation du dispositif de signalisation d'un champ d'observation tel que décrit par l'invention. L'équipement 901 est composé d'un dispositif de signalisation 102, d'un dispositif de capture 101 et d'une base 135. Le dispositif de signalisation 102 est ici composé de quatre indicateurs sensoriels dont 105 et 106. Dans notre exemple, ces indicateurs sensoriels sont des indicateurs lumineux 105 (désactivé) et 106 (activé). En outre, dans notre exemple, les indicateurs 105 et 106 sont disposés sur un support de forme circulaire horizontal fixé solidairement à une base 135 de type potence. Sur cette potence est disposé également le dispositif de capture banalisé 101 de type panoramique. Le dispositif de signalisation 102 est en particulier disposé symétriquement selon l'axe vertical du dispositif de capture 101. L'équipement 901 se trouve dans un espace, défini préalablement comme un espace observé et référencé 100. Dans cet espace observé se déplace une personne référencée 300, défini précédemment comme un observé.

Dans ce mode de réalisation, l'ensemble des quatre indicateurs sont placés sur un seul élément, le support de forme circulaire horizontal. De plus, le dispositif de signalisation 102 est situé à proximité du dispositif de capture 101 afin qu'une association, du point de vue cognitif chez un observé, s'effectue vers un robot de type humanoïde : l' « œil » de l'observateur serait le centre de la caméra 101 et la direction d'observation de cet « oeil » serait matérialisée par la direction horizontale formée par le centre de la caméra 101 et la localisation de l'indicateur activé 106.

Par un schéma 500 qui illustre le découpage de l'espace observé 100 en quatre secteurs d'angle disjoints définis par le repère 503, on observe qu'une direction d'observation 501, appelée première direction d'observation et associée à un champ d'observation 502 appelé premier champ d'observation, est incluse dans l'un des quatre secteurs d'angle. Ainsi, l'indicateur 106 est allumé, le seul parmi les quatre indicateurs car il signalise le secteur d'angle référencé 505 dans lequel la direction d'observation 501 se trouve.

Dans ce mode de réalisation, la direction d'observation 501 est définie par la direction du regard d'un observateur 202 placé dans un espace d'observation 110a. Cette direction d'observation 501 est, dans notre exemple, déterminée en particulier par des données issues de capteurs intégrés dans un casque de réalité virtuelle 201 porté par l'observateur 202. Ce casque 201 comprend à la fois à un dispositif de pilotage et à un dispositif de visualisation.

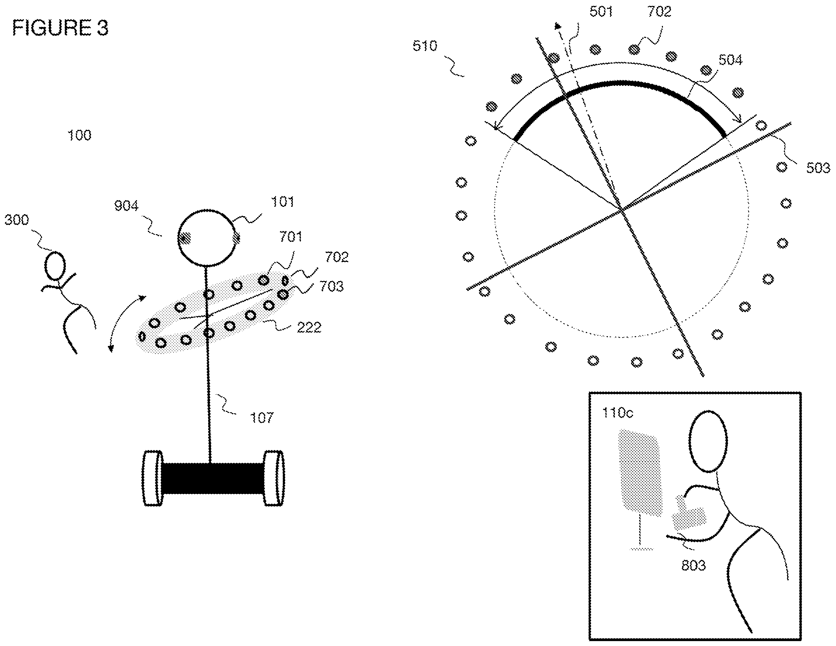

Alternativement, un dispositif de pilotage peut également prendre la forme d'un casque de réalité virtuelle couplé à une manette d'interaction, par exemple de type HTC Vive (marque déposée) ou Oculus (marque déposée) ; l'observateur se dirige et se déplace alors dans la scène virtuelle par ses mouvements de tête (direction du regard), et éventuellement à la manipulation d'une manette d'interaction telle qu'un élément référencé 803 dans la figure 3. Dans un mode de réalisation particulier, les mouvements réels de la manette d'interaction sont représentés sous la forme d'un faisceau laser à travers un dispositif de visualisation. L'observateur dirige également ce faisceau pour « zoomer » sur un élément particulier de l'espace observé.

Alternativement, un dispositif de pilotage peut également être un dispositif équipé de capteurs (gyroscope, accéléromètre, caméra infra-rouge, plusieurs caméras, etc.) pour calculer les distances dans un espace, etc. pour interpréter les déplacements de l'observateur.

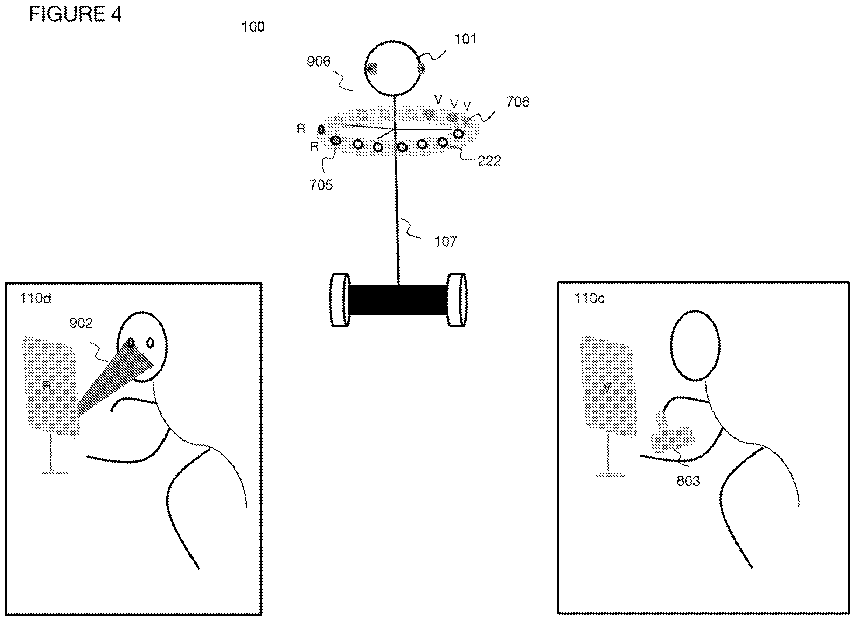

Alternativement, un dispositif de pilotage peut également être un dispositif de type eye-tracking tel que l'élément référencé 902 dans la figure 4.

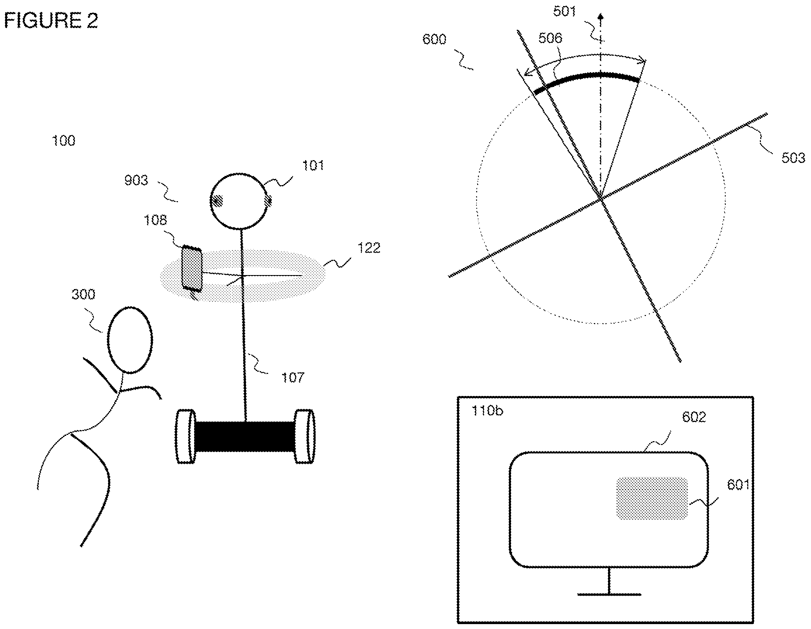

Dans ce mode de réalisation, le casque de réalité virtuelle 201 est également équipé d'un écran, sur lequel apparaît la représentation de l'espace observé. Alternativement, un dispositif de visualisation similaire peut également être un dispositif de type lunette holographique, tablette, smartphone, etc. Selon un mode de réalisation, un dispositif de visualisation peut diffuser un contenu en cours de visualisation vers un autre dispositif de visualisation de type écran, tel que l'élément 601 de la figure 2.

Le schéma 500 illustre la projection horizontale des différentes données gérées par le procédé de signalisation. La direction d'orientation 501 de l'observateur 202 est comprise dans un secteur 505 associé à l'indicateur 106. L'indicateur lumineux 106 est donc activé tant que la direction d'observation 501 est comprise dans le secteur 505. Le champ d'observation déterminé pour l'observateur 202 est représenté par un arc de cercle référencé 502.

Dans ce mode de réalisation, le dispositif de signalisation 102 comprend en particulier un support permettant le passage de rayons lumineux, par exemple un support transparent voire translucide. De cette manière, le signal lumineux émis par chacun des indicateurs est perceptible quelle que soit la position de l'observé 300 dans l'espace observé 100. Par exemple ici, l'observé 300 n'est pas observé par l'observateur 202, mais l'observé peut interpréter, de sa position dans l'espace observé, le secteur d'observation de 90° environ comprenant la direction d'observation de l'observateur 202, grâce à la transparence des matériaux utilisés pour le support et grâce aux indicateurs lumineux visibles de part et d'autre du support.

La figure 2 illustre un équipement 903 décrivant un autre mode de réalisation du dispositif de signalisation d'un champ d'observation tel que décrit par l'invention. L'équipement 903 est composé d'un dispositif de signalisation 122, d'un dispositif de capture 101 et d'une base 107. Le dispositif de signalisation 122 est composé d'un écran 108 et d'un support sur lequel cet écran est disposé. Le support, de forme circulaire horizontal, est capable de réaliser une rotation selon son axe de symétrie vertical. Alternativement, l'écran 108 se déplace sur le support horizontal qui, lui, demeure fixe. La base 107 sur laquelle repose le dispositif 122 dispose de roulettes, ou autres dispositifs permettant une mobilité de la base, et se déplace dans l'espace observé 100. Sur cette base 107 est disposé également un dispositif de capture banalisé 101 de type panoramique.

Dans ce mode de réalisation, l'écran 108 affiche tout ou partie du champ d'observation considéré d'un espace d'observation 110b. Sur un dispositif de visualisation 602 est configurée par exemple une fenêtre de visualisation 601 sur laquelle un champ d'observation relatif à l'élément 506 du schéma 600 est affiché. Le champ d'observation référencé 506 peut ne pas être corrélé au champ de vision assimilable à celui d'un humain : il peut donc être dimensionné en particulier selon des paramétrages utilisateur.

Dans ce mode de réalisation, le support circulaire du dispositif 122 effectue une rotation selon le changement de la direction d'observation 501 pilotée depuis un espace d'observation 110b. Dans le cas où l'observé référencé 300 se positionne en face de l'écran 108, l'observé est donc visible de l'espace d'observation 110b. De même, l'observé 300 se voit dans l'écran 108, ainsi que tout ou partie du contenu affiché sur la fenêtre 601, selon des paramétrages effectués par le procédé ici décrit.

La figure 3 illustre un équipement 904 décrivant un autre mode de réalisation du dispositif de signalisation d'un champ d'observation tel que décrit par l'invention. L'équipement 904 est composé d'un dispositif de signalisation 222, d'un dispositif de capture 101 et d'une base 107. Le dispositif de signalisation 222 est composé d'un ensemble d'indicateurs lumineux dont 701 (activé), 702 (activé) et 703 (activé), et d'un support de forme circulaire capable de réaliser une rotation selon son axe de symétrie vertical ainsi que selon un grand nombre de ses axes de symétrie horizontaux, et ce, jusqu'à 90° environ. La base 107 sur laquelle repose le dispositif 222 dispose de roulettes, ou autres dispositifs permettant une mobilité de la base, et se déplace dans l'espace observé 100. Sur cette base est disposé également un dispositif de capture banalisé 101 de type panoramique.

Dans ce mode de réalisation, le dispositif de signalisation 222 signalise un champ d'observation en activant une partie d'indicateurs (701, 702, 703) parmi un ensemble d'indicateurs représentant un découpage de l'espace observé. Plusieurs indicateurs lumineux peuvent s'activer en même temps pour signaliser un champ d'observation ; le nombre d'indicateurs activés peut varier.

Dans le schéma 510 illustrant une projection, selon le plan du dispositif 222, de différentes données gérées par le procédé de signalisation, un champ d'observation relatif à l'arc de cercle référencé 504, est associé à la direction d'observation 501 pilotée depuis un espace d'observation 110c : l'ensemble des indicateurs lumineux inclus dans le champ d'observation 504 sont activés.

Dans ce mode de réalisation, la composante verticale de la direction d'observation est également signalisée par une inclinaison du support du dispositif de signalisation 222. L'inclinaison du support du dispositif de signalisation 222 est en particulier identique à une inclinaison réalisée depuis un dispositif de pilotage 803 localisé dans l'espace d'observation 110c.

La figure 4 illustre un équipement 906 décrivant un autre mode de réalisation du dispositif de signalisation signalisant deux champs d'observation distincts. L'équipement 906 est composé d'un dispositif de signalisation 222, d'un dispositif de capture 101 et d'une base 107. Le dispositif de signalisation 222 est composé d'un ensemble d'indicateurs lumineux dont 705 (activé) et 706 (activé), et d'un support de forme circulaire horizontal. La base 107 sur laquelle repose le dispositif 222 dispose de roulettes, ou autres dispositifs permettant une mobilité de la base, et se déplace dans l'espace observé 100. Sur cette base est également disposé un dispositif de capture banalisé 101 de type panoramique.

Dans ce mode de réalisation, deux espaces d'observation 110d et 110c dans lesquels se trouvent des personnes disposant d'un dispositif de pilotage de la caméra 101, respectivement un dispositif de type eye-tracking 902 et un joystick 803. Par dispositif de type eye-tracking est entendu un dispositif matériel et logiciel permettant de suivre les mouvements oculaires d'une personne pour suivre les parcours et les points de fixation de son regard dans un environnement, en particulier à travers un contenu visualisé sur un écran ; ce dispositif de pilotage s'appuie sur une direction d'observation d'un observateur localisé dans l'espace d'observation 110d pour piloter un affichage du contenu capté par le dispositif de capture selon cette direction d'observation sur cet écran.

Dans ce mode de réalisation, le dispositif de signalisation 222 utilise en particulier des indicateurs visuels de couleurs différentes afin de signaliser chacun des champs d'observation relatifs aux espaces 110d et 110c. Les indicateurs lumineux tels que l'indicateur 705, sont de couleur rouge (référencée « R »), et signalisent un premier champ d'observation piloté depuis l'espace d'observation 110d, et les indicateurs tels que l'indicateur 706, sont de couleur verte (référencée « V »), et signalisent un deuxième champ d'observation piloté depuis l'espace d'observation 110c. Dans ce mode de réalisation particulier, si un indicateur commun est nécessaire à la signalisation des deux champs simultanément, cet indicateur peut prendre la couleur jaune. Alternativement, deux types d'indicateurs sensoriels différents peuvent être utilisés.

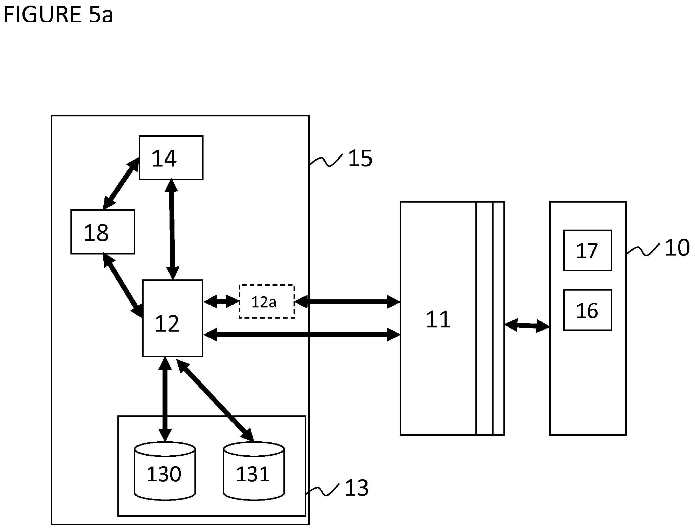

La figure 5a illustre de façon schématique un environnement de mise en oeuvre de l'invention selon un mode particulier de réalisation de l'invention. On considère une infrastructure 15, appelée infrastructure de signalisation, d'un dispositif de signalisation à laquelle une application cliente 10 est connectée via un réseau de communication.

Par exemple, l'application cliente 10 est un ensemble de programmes intégrés dans un dispositif de type lunette de réalité virtuelle, offrant en particulier un module de visualisation 16 d'un contenu audiovisuel capté par un dispositif de capture, et un module de pilotage 17 d'une direction d'observation à travers ce contenu capté.

L'infrastructure de signalisation 15 comprend:
- un module de signalisation 14 adapté pour signaliser un champ d'observation à partir d'un modèle de description décrivant les paramètres de signalétiques basées sur des indicateurs sensoriels,
- un module de détection 18 adapté pour signaliser une entité en mouvement dans un champ d'observation donné,
- un module d'obtention 12a adapté pour obtenir une direction d'observation issue de données reçues de l'application cliente 10,
- un module de détermination 12 adapté pour déterminer un champ d'observation en fonction d'une direction d'observation et d'un modèle de détermination décrivant les paramètres de champs d'observation,
- un ensemble 13 de modules de stockage, comprenant au moins une base de données 130 dans laquelle des modèles de détermination associés à des champs d'observation sont stockés, et une base de données 131 dans laquelle des modèles de description associés à des signalétiques sont stockés.

Le module de détermination 12 est configuré pour communiquer avec le module d'obtention 12a, le module de signalisation 14 et le module de détection 18. Ces deux derniers modules peuvent également communiquer entre eux.

Les modules d'obtention 12a et de détermination 12 sont configurés pour communiquer avec l'application cliente 10 à travers un canal de communication via une ou plusieurs interfaces utilisateur 11, appelée interface 11, en particulier l'interface du module de visualisation 16 ou l'interface du module de pilotage 17 de l'application cliente 10 ; le module d'obtention 12a étant en écoute des notifications du canal auprès de l'interface 11.

Le principe de l'invention est ici décrit dans le cas d'une application cliente 10 relative à des lunettes de réalité virtuelle, l'invention s'applique également pour d'autres types d'application cliente.

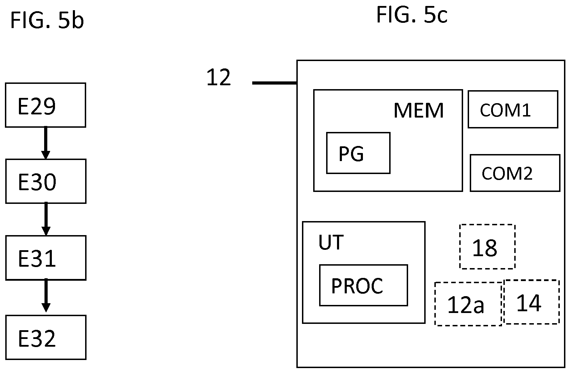

La figure 5b illustre des étapes du procédé de signalisation selon un mode particulier de réalisation du procédé de signalisation décrit en relation avec la figure 5a.

Lorsque l'application cliente 10 envoie des données, lors d'une étape E29, elle émet vers l'interface 11 des données, en particulier caractérisant une direction d'observation, comprenant par exemple les coordonnées spatiales de cette direction. Lors de l'étape E29, le module d'obtention 12a reçoit une notification de l'interface 11 indiquant ces caractéristiques.

Lors d'une étape E30, le module d'obtention 12a transmet au module de détermination 12 une direction d'observation, en particulier relativement aux localisations respectives des dispositifs de capture et de représentation dans l'espace observé.

Lors d'une étape E31, le module de détermination 12 détermine un champ d'observation associé à la direction d'observation, par exemple à partir de données issues de la base de données 130 comprenant des modèles de détermination tels que le modèle du champ de vision d'un humain, et à partir de données spécifiques liées au contexte de l'espace observé et/ou de l'espace d'observation (contraintes environnementales, choix observé et/ou observateur, paramétrages des dispositifs de capture, de visualisation, de pilotage etc.) et reçues de l'application cliente 10.

Lors d'une étape E32, le module de détermination 12 communique au module de signalisation 14 les résultats de la détermination du champ d'observation. Le module de signalisation 14 active alors les indicateurs sensoriels correspondants au champ d'observation déterminé, par exemple à partir de données issues de la base de données 131 comprenant des modèles de signalisation.

Alternativement lors de l'étape E32, le module de détermination 12 communique également les résultats de la détermination du champ d'observation au module de détection 18 qui émet en continu des signaux guettant l'apparition de mouvements dans le champ d'observation déterminé. En cas de détection, le module de détection 18 envoie une notification au module de signalisation 14. Le module de signalisation 14 active alors les indicateurs sensoriels correspondants à la détection de mouvements. Alternativement, le module de détection 18 envoie également une notification au module de détermination 12, qui renvoie une notification vers l'application cliente 10 pour signaler à l'observateur la détection d'un mouvement dans son champ d'observation.

La figure 5c illustre un dispositif adapté pour la mise en oeuvre du procédé de signalisation d'un champ d'observation selon un mode particulier de réalisation de l'invention décrit ci-dessus. Le dispositif correspond au module de détermination 12 de l'infrastructure de signalisation 15 de la figure 5a.

Le dispositif de détermination 12 comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de signalisation tel que décrit précédemment, lorsque le programme est exécuté par le processeur PROC.

A l'initialisation, les instructions de code du programme d'ordinateur PG sont par exemple chargées dans une mémoire RAM avant d'être exécutées par le processeur PROC. Le processeur PROC de l'unité de traitement UT met notamment en oeuvre les étapes du procédé de signalisation décrit en relation avec la figure 5b, selon les instructions du programme d'ordinateur PG.

Pour cela, le dispositif de détermination 12 comprend une interface de communication COM1 adaptée à émettre ou recevoir des notifications vers ou depuis l'interface 11, selon les instructions du programme d'ordinateur PG. En variante, tout ou partie de l'interface 11 peut être comprise dans l'application cliente 10.

Le dispositif de détermination 12 comprend également une interface de communication COM2 adaptée pour communiquer avec l'ensemble de modules de stockage 13.

Selon un mode particulier de réalisation de l'invention, le dispositif de détermination 12 comprend une interface de communication (non représentée), telle qu'une interface Ethernet, WIFI ou autre, permettant au module de détermination 12 de se connecter à un réseau de communication.

Selon un mode particulier de réalisation de l'invention, le dispositif de détermination 12 comprend le module d'obtention 12a et/ou le module de signalisation 14 et/ou le module de détection 18.

L'invention a été décrite ci-dessus dans le cas d'une infrastructure de signalisation 15 ne comprenant qu'un module de signalisation, un module de détermination, un module de détection et un module d'obtention. En pratique, l'infrastructure de signalisation 15 comprend plusieurs modules de signalisation, plusieurs modules de détermination, plusieurs modules de détection et plusieurs modules d'obtention, afin de gérer efficacement le nombre de champs d'observation à signaliser associés aux différentes observations. Tous ces modules de signalisation, de détermination, de détection et d'obtention sont interconnectés avec l'ensemble de modules de stockage 13 stockant des modèles de détermination et de description, et avec des interfaces utilisateur 11 synchronisées.

Selon un mode particulier de réalisation de l'invention (non représentée), tout ou partie de l'infrastructure de signalisation 15 est compris dans le dispositif de capture.

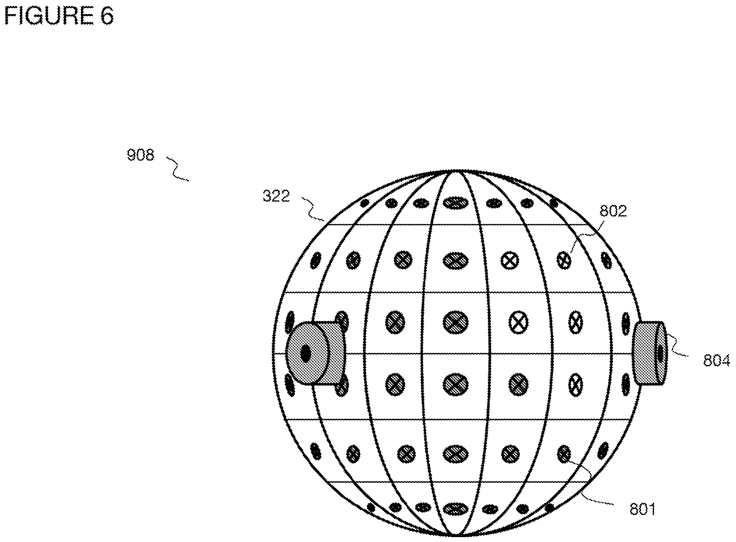

La figure 6 illustre un équipement 908 comprenant un mode de réalisation du dispositif de signalisation d'un champ d'observation tel que décrit par l'invention. L'équipement 908 est composé d'un dispositif de signalisation 322 et d'un dispositif de capture 804 de type panoramique. Le dispositif de signalisation 322 est ici composé d'une sphère et d'un ensemble d'indicateurs lumineux dont 802 (activé) et 801 (désactivé), disposés sur tout ou partie de la sphère.

Dans un mode de réalisation particulier, une activation d'un ou de plusieurs indicateurs tels que l'indicateur 802, signalise un angle solide relatif à un champ d'observation. Par angle solide est entendu le terme habituellement utilisé par l'homme du métier pour caractériser un angle dans un espace à trois dimensions. Ainsi une signalisation d'un champ d'observation est effectuée selon des coordonnées spatiales dans un espace à trois dimensions.

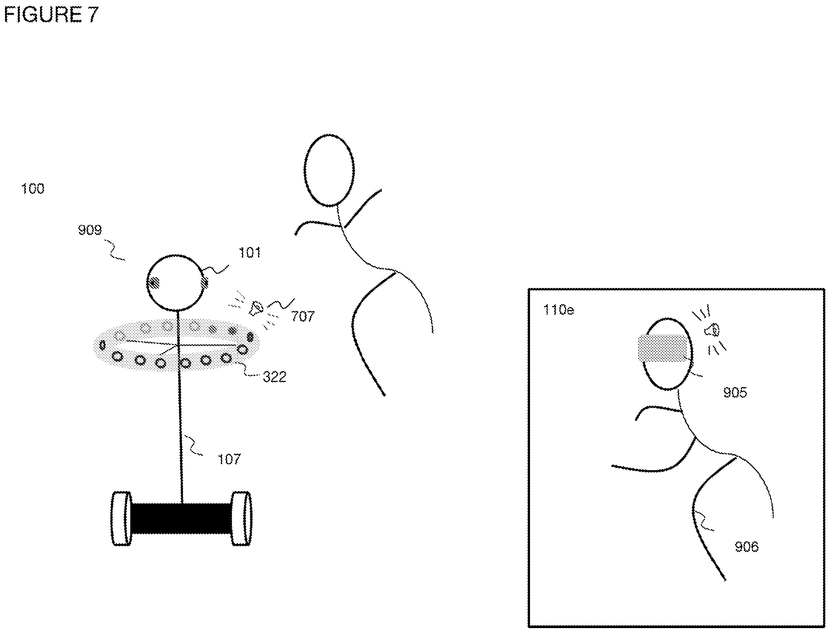

La figure 7 illustre un équipement 909 comprenant un autre mode de réalisation du dispositif de signalisation d'un champ d'observation tel que décrit par l'invention. L'équipement 909 est composé d'un dispositif de signalisation 322, d'un dispositif de capture 101 et d'une base 107. Le dispositif de signalisation 322 est composé d'un ensemble d'indicateurs lumineux, d'au moins un indicateur sonore représenté par 707 (activé) et d'un support de forme circulaire horizontal. La base 107 sur laquelle repose le dispositif 322 dispose de roulettes, ou autres dispositifs permettant une mobilité de la base, et se déplace dans l'espace observé 100. Sur cette base est disposé également un dispositif de capture banalisé 101 de type panoramique.

Dans ce mode de réalisation, le dispositif de signalisation 322 signalise un champ d'observation en utilisant une première signalétique basée sur les indicateurs lumineux. L'intrusion d'une entité en mouvement dans un champ d'observation piloté par un observateur 906 localisé dans un espace d'observation 110e, est signalisée par une deuxième signalétique à l'aide du dispositif de signalisation 322, dans notre exemple, basée sur l'indicateur sonore 707. Alternativement, un clignotement d'un ou plusieurs indicateurs lumineux peut être considéré comme une deuxième signalétique.

Dans un mode de réalisation particulier, l'observateur 906 reçoit une notification à travers son dispositif 905 de type casque de réalité virtuelle, par exemple de type sonore, pour lui signaler cette détection.

Dans le présent texte, les modules peuvent être mises en oeuvre sous forme logicielle (ou « software »), auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et applications, comme par exemple un programme application destiné à être chargé et exécuté sur un composant de type FPGA (Field Programmable Gate Array). »

Bien que décrits à travers un certain nombre d'exemples de réalisation détaillés, le procédé proposé et l'objet pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. En outre, il se peut que certains dispositifs et objets décrits ci-dessus n'incorporent pas la totalité des modules et fonctions décrits pour les modes de réalisation préférés.

## Revendications

1. **Dispositif** de signalisation (102), apte à fonctionner en association avec un dispositif de capture (101) apte à capturer une scène, ledit dispositif de signalisation comprenant un module de signalisation (14) apte à signaliser un premier champ d'observation (502) associé à une première direction d'observation (501) d'une scène capturée par le dispositif de capture (101), à partir d'une première signalétique basée sur au moins un indicateur sensoriel (106), **le dispositif de signalisation étant caractérisé en ce qu'**il est en outre apte à signaliser une entité en mouvement contenue dans ledit premier champ d'observation, à partir d'une deuxième signalétique basée sur au moins un indicateur sensoriel (707).

2. Dispositif de signalisation selon la revendication 1, ledit dispositif de signalisation étant apte à signaliser le premier champ d'observation (502) à partir d'une première signalétique basée sur au moins un indicateur visuel (106).

3. Dispositif de signalisation selon la revendication 1 ou 2, ledit dispositif de signalisation étant en outre apte à obtenir une première direction d'observation (501) d'un dispositif (201) dirigé par un observateur (202).

4. Dispositif de signalisation selon l'une des revendications 1 à 3, ledit dispositif de signalisation étant en outre apte à signaliser un deuxième champ d'observation associé à une deuxième direction d'observation.

5. Dispositif de signalisation selon l'une des revendications 1 à 4, ledit dispositif de signalisation étant en outre apte à signaliser une activation d'une fonction de zoom/dézoom.

6. Dispositif de signalisation selon l'une revendications 1 à 5, ledit dispositif de signalisation étant en outre apte à signaliser le premier champ d'observation à partir d'une première signalétique basée sur deux indicateurs.

7. Dispositif de signalisation selon l'une des revendications 1 à 6, ledit dispositif de signalisation étant en outre apte à signaliser le premier champ d'observation à partir d'une première signalétique basée sur quatre indicateurs.

8. Dispositif de signalisation selon l'une des revendications 1 à 7, ledit dispositif de signalisation ayant une forme principale circulaire.

9. Dispositif de signalisation selon l'une des revendications 1 à 8, ledit dispositif de signalisation ayant une forme principale sphérique.

10. Dispositif de signalisation selon l'une des revendications 1 à 9, ledit dispositif de signalisation étant en outre apte à signaliser le premier champ d'observation à partir d'une première signalétique projetée.

11. **Procédé** de signalisation associé à un dispositif de signalisation apte à fonctionner en association avec un dispositif de capture (101) apte à capturer une scène, le procédé comprenant une signalisation d'un premier champ d'observation (502) associé à une première direction d'observation (501) d'une scène capturée par ledit dispositif de capture (101), à partir d'une première signalétique basée sur au moins un indicateur sensoriel (106), **ledit procédé étant caractérisé en ce qu'**il comprend en outre une signalisation d'une entité en mouvement contenue dans ledit premier champ d'observation, à partir d'une deuxième signalétique basée sur au moins un second indicateur sensoriel (707).

12. Procédé selon la revendication 11 dans lequel ladite première signalétique est basée sur au moins un indicateur visuel (106).

13. Procédé selon la revendication 11 ou 12 comprenant une obtention de ladite première direction d'observation (501) d'un dispositif (201) dirigé par un observateur (202).

14. **Programme** d'ordinateur apte à être mis en oeuvre sur un dispositif de signalisation (102) tel que défini dans la revendication 1, le programme comprenant des instructions de code qui, lorsqu'il est exécuté par un processeur, réalise le procédé défini dans l'une des revendications 11 à 13.

15. **Support** de données sur lequel a été mémorisée au moins une série d'instructions de code de programme pour l'exécution d'un procédé selon l'une des revendications 11 à 13.

## Patentansprüche

1. Signalisierungs**vorrichtung** (102), die geeignet ist, in Verbindung mit einer ersten Erfassungsvorrichtung (101) zu funktionieren, die geeignet ist, eine Szene zu erfassen, wobei die Signalisierungsvorrichtung ein Signalisierungsmodul (14) umfasst, das geeignet ist, ein erstes Beobachtungsfeld (502), das einer ersten Beobachtungsrichtung (501) einer Szene zugeordnet ist, die von der Erfassungsvorrichtung (101) erfasst wird, anhand einer ersten Signalgebung zu signalisieren, die auf wenigstens einer sensorischen Anzeigeeinrichtung (106) basiert,
**wobei die Signalisierungsvorrichtung dadurch gekennzeichnet ist, dass** sie ferner geeignet ist, eine sich bewegende Entität, die im ersten Beobachtungsfeld enthalten ist, anhand einer zweiten Signalgebung zu signalisieren, die auf wenigstens einer sensorischen Anzeigeeinrichtung (707) basiert.

2. Signalisierungsvorrichtung nach Anspruch 1, wobei die Signalisierungsvorrichtung geeignet ist, das erste Beobachtungsfeld (502) anhand einer ersten Signalgebung zu signalisieren, die auf wenigstens einer visuellen Anzeigeeinrichtung (106) basiert.

3. Signalisierungsvorrichtung nach Anspruch 1 oder 2, wobei die Signalisierungsvorrichtung ferner geeignet ist, eine erste Beobachtungsrichtung (501) von einer Vorrichtung (201) zu beziehen, die von einem Beobachter (202) gesteuert wird.

4. Signalisierungsvorrichtung nach einem der Ansprüche 1 bis 3, wobei die Signalisierungsvorrichtung ferner geeignet ist, ein zweites Beobachtungsfeld zu signalisieren, das einer zweiten Beobachtungsrichtung zugeordnet ist.

5. Signalisierungsvorrichtung nach einem der Ansprüche 1 bis 4, wobei die Signalisierungsvorrichtung ferner geeignet ist, eine Aktivierung einer Hinein-/Herauszoomfunktion zu signalisieren.

6. Signalisierungsvorrichtung nach einem der Ansprüche 1 bis 5, wobei die Signalisierungsvorrichtung ferner geeignet ist, das erste Beobachtungsfeld anhand einer ersten Signalgebung zu signalisieren, die auf zwei Anzeigeeinrichtungen basiert.

7. Signalisierungsvorrichtung nach einem der Ansprüche 1 bis 6, wobei die Signalisierungsvorrichtung ferner geeignet ist, das erste Beobachtungsfeld anhand einer ersten Signalgebung zu signalisieren, die auf vier Anzeigeeinrichtungen basiert.

8. Signalisierungsvorrichtung nach einem der Ansprüche 1 bis 7, wobei die Signalisierungsvorrichtung eine kreisförmige Hauptform aufweist.

9. Signalisierungsvorrichtung nach einem der Ansprüche 1 bis 8, wobei die Signalisierungsvorrichtung eine kugelförmige Hauptform aufweist.

10. Signalisierungsvorrichtung nach einem der Ansprüche 1 bis 9, wobei die Signalisierungsvorrichtung ferner geeignet ist, das erste Beobachtungsfeld anhand einer projizierten ersten Signalgebung zu signalisieren.

11. Signalisierungs**verfahren,** das einer Signalisierungsvorrichtung zugeordnet ist, die geeignet ist, in Verbindung mit einer Erfassungsvorrichtung (101) zu funktionieren, die geeignet ist, eine Szene zu erfassen, wobei das Verfahren ein Signalisieren eines ersten Beobachtungsfelds (502), das einer ersten Beobachtungsrichtung (501) einer Szene zugeordnet ist, die von der Erfassungsvorrichtung (101) erfasst wird, anhand einer ersten Signalgebung umfasst, die auf wenigstens einer sensorischen Anzeigeeinrichtung (106) basiert, **wobei das Verfahren dadurch gekennzeichnet ist, dass** es ferner ein Signalisieren einer sich bewegenden Entität, die im ersten Beobachtungsfeld enthalten ist, anhand einer zweiten Signalgebung umfasst, die auf wenigstens einer sensorischen Anzeigeeinrichtung (707) basiert.

12. Verfahren nach Anspruch 11, wobei die erste Signalgebung auf wenigstens einer visuellen Anzeigeeinrichtung (106) basiert.

13. Verfahren nach Anspruch 11 oder 12, umfassend ein Beziehen der ersten Beobachtungsrichtung (501) einer Vorrichtung (201), die von einem Beobachter (202) gesteuert wird.

14. Computer**programm,** das geeignet ist, von einer Signalisierungsvorrichtung (102) nach Anspruch 1 verwendet zu werden, wobei das Programm Code-Anweisungen umfasst, das, wenn es von einem Prozessor ausgeführt wird, das Verfahren nach einem der Ansprüche 11 bis 13 durchführt.

15. Daten**träger,** auf dem wenigstens einer Reihe von Programmcode-Anweisungen für die Ausführung eines Verfahrens nach einem der Ansprüche 11 bis 13 gespeichert wurde.

## Claims

1. Signalling **device** (102), able to operate in combination with a capturing device (101) able to capture a scene, said signalling device comprising a signalling module (14) able to signal a first field of observation (502) associated with a first direction of observation (501) of a scene captured by the capturing device (101), on the basis of a first sign based on at least one sensorial indicator (106), **the signalling device being characterized in that** it is furthermore able to signal a moving entity contained in said first field of observation, on the basis of a second sign based on at least one sensorial indicator (707).

2. Signalling device according to Claim 1, said signalling device being able to signal the first field of observation (502) on the basis of a first sign based on at least one visual indicator (106).

3. Signalling device according to Claim 1 or 2, the signalling device furthermore being able to obtain a first direction of observation (501) of a device (201) directed by an observer (202).

4. Signalling device according to one of Claims 1 to 3, said signalling device furthermore being able to signal a second field of observation associated with a second direction of observation.

5. Signalling device according to one of Claims 1 to 4, said signalling device furthermore being able to signal activation of a zoom in/zoom out function.

6. Signalling device according to one of Claims 1 to 5, said signalling device furthermore being able to signal the first field of observation on the basis of a first sign based on two indicators.

7. Signalling device according to one of Claims 1 to 6, said signalling device furthermore being able to signal the first field of observation on the basis of a first sign based on four indicators.

8. Signalling device according to one of Claims 1 to 7, said signalling device having a circular primary shape.

9. Signalling device according to one of Claims 1 to 8, said signalling device having a spherical primary shape.

10. Signalling device according to one of Claims 1 to 9, said signalling device furthermore being able to signal the first field of observation on the basis of a first projected sign.

11. Signalling **method** associated with a signalling device able to operate in combination with a capturing device (101) able to capture a scene, the method comprising signalling a first field of observation (502) associated with a first direction of observation (501) of a scene captured by said capturing device (101), on the basis of a first sign based on at least one sensorial indicator (106), **said method being characterized in that** it furthermore comprises signalling a moving entity contained in said first field of observation, on the basis of a second sign based on at least one second sensorial indicator (707).

12. Method according to Claim 11, wherein said first sign is based on at least one visual indicator (106).

13. Method according to Claim 11 or 12, comprising obtaining said first direction of observation (501) of a device (201) directed by an observer (202).

14. Computer **program** able to be implemented on a signalling device (102) such as defined in Claim 1, the program comprising code instructions, that, when it is executed by a processor, performs the method defined in one of Claims 11 to 13.

15. Data **carrier** on which at least one sequence of program code instructions for executing a method according to one of Claims 11 to 13 has been stored.
